(19) Europäisches Patentamt
European Patent Office
Office européen des brevets

(11) EP 1 274 751 B1

(12) EUROPEAN PATENT SPECIFICATION

(45) Date of publication and mention of the grant of the patent:
**05.12.2007 Bulletin 2007/49**

(21) Application number: **01917245.1**

(22) Date of filing: **29.03.2001**

(51) Int Cl.:
***C08F 110/02*** *(2006.01)* ***C08F 2/00*** *(2006.01)*
***C08F 4/70*** *(2006.01)*

(86) International application number:
**PCT/GB2001/001402**

(87) International publication number:
**WO 2001/077193 (18.10.2001 Gazette 2001/42)**

# (54) POLYMERISATION PROCESS

POLYMERISATIONSVERFAHREN

PROCEDE DE POLYMERISATION

(84) Designated Contracting States:
**AT BE CH CY DE DK ES FI FR GB GR IE IT LI LU MC NL PT SE TR**

(30) Priority: **10.04.2000 GB 0430017**

(43) Date of publication of application:
**15.01.2003 Bulletin 2003/03**

(73) Proprietor: **INEOS EUROPE LIMITED**
**Lyndhurst, Hampshire, SO43 7FG (GB)**

(72) Inventor: **BEHUE, Patrick, Daniel, Yves**
**F-13800 Istres (FR)**

(74) Representative: **Smith, Julian Philip Howard et al**
**Compass Patents LLP**
**120 Bridge Road**
**Chertsey**
**Surrey, KT16 8LA (GB)**

(56) References cited:
**EP-A- 1 026 180**
**WO-A-95/33779**
**WO-A-98/40374**
**WO-A-99/12981**

EP 1 274 751 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a process for the polymerisation and copolymerisation of 1-olefins, and specifically to such processes utilising polymerisation catalysts based on certain transition metal complexes.

The use of certain transition metal compounds to polymerise 1-olefins, for example, ethylene or propylene, is well established in the prior art. The use of Ziegler-Natta catalysts, for example, those catalysts produced by activating titanium halides with organometallic compounds such as triethylaluminium, is fundamental to many commercial processes for manufacturing polyolefins. Over the last twenty or thirty years, advances in the technology have led to the development of Ziegler-Natta catalysts which have such high activities that olefin polymers and copolymers containing very low concentrations of residual catalyst can be produced directly in commercial polymerisation processes. The quantities of residual catalyst remaining in the produced polymer are so small as to render unnecessary their separation and removal for most commercial applications. Such processes can be operated by polymerising the monomers in the gas phase, or in solution or in suspension in a liquid hydrocarbon diluent. Polymerisation of the monomers can be carried out in the gas phase (the "gas phase process"), for example by fluidising under polymerisation conditions a bed comprising the target polyolefin powder and particles of the desired catalyst using a fluidising gas stream comprising the gaseous monomer.

Our own WO99/12981 discloses that 1-olefins may be polymerised by contacting it with certain transition metal, particularly iron, complexes of selected 2,6-pyridinecarboxaldehydebis(imines) and 2,6-diacylpyridinebis(imines). Our WO99/00713 discloses products made using such catalysts, and also discusses the molecular weight distribution (MWD = $M_w/M_n$) of such polymers. It is an object of the present invention to provide an improved gas phase polymerisation process using such catalysts.

When using most traditional catalyst systems, typically only marginal variation of MWD is achievable through control of operating conditions and a compromise has to be reached in selecting a particular catalyst system that best suits all applications being targeted with that particular catalyst. Should the MWD need to be further tailored to best suit the requirements of a particular application this can therefore necessitate a change of catalyst system. Not only does this require costly research and development effort to identify and optimise a range of catalysts and complexes to cover the range of applications which may be accessed by a particular catalyst family, but it also incurs significant costs associated with production of additional non-prime transitional products and the reduction in or loss of production during the such catalyst transitions.

EP 1026180A, published after the priority date of this application, discloses that in the case of certain specific late transition metal catalysts having Lewis base functionality, it is possible to obtain a molecular weight distribution of at least 5.0 by adjusting the temperature of the polymerisation.

We have discovered that in polymerisation processes using late transition metal catalysts, there is a direct relationship between the temperature of the polymerisation and certain physical properties, notably MWD.

Accordingly, in a first aspect the present invention comprises the use of temperature to control the molecular weight distribution $M_w/M_n$ of polymer produced by a process which comprises contacting monomeric olefin under polymerisation conditions with a polymerisation catalyst comprising a late transition metal complex.

By "late transition metal complex" is meant a complex of a metal from Groups VIIIb or Ib of the Periodic Table.

The late transition metal complexes have the formula

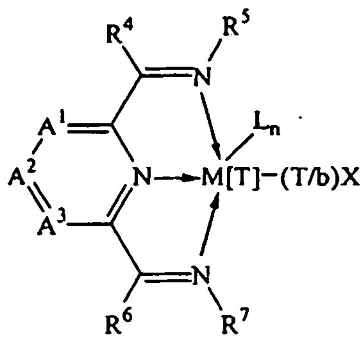

Formula (I)

wherein M is Fe[II], Fe[III], Co[II], Co[III], Ni[II], Rh[II], Rh[III], Ru[II], Ru[III], Ru[IV] or Pd[II]; X represents an atom or group covalently or ionically bonded to the transition metal M; T is the oxidation state of the transition metal M and b is

the valency of the atom or group X; L is a group datively bound to M, and n is from 0 to 5; $A^1$ to $A^3$ are each independently N or P or CR, with the proviso that at least one is CR; and $R^4$ to $R^7$ are each independently selected from hydrogen, halogen, hydrocarbyl, substituted hydrocarbyl, heterohydrocarbyl, substituted heterohydrocarbyl or $SiR'_3$ where each R' is independently selected from hydrogen, halogen, hydrocarbyl, substituted hydrocarbyl, heterohydrocarbyl and substituted heterohydrocarbyl.

A further aspect of the invention comprises the use of temperature to control the die-swell, plastic recovery, MFR ratio, or any other property which can be used as an indication of the processability or extrudability of the polymer being produced, of polymer produced by a process which comprises contacting monomeric olefin under polymerisation conditions in the gas phase with the above polymerisation catalyst.

Many of the above parameters are important for controlling the processability of the polymer product, and thus being able to control them by such a straightforward means is a major benefit. For example, for blow moulding applications it is important that the polymer resin exhibits a relatively high melt flow ratio. Melt flow ratios may be increased to a certain degree by various compounding methods, however these methods increase the costs of manufacture, require additional steps and adversely affect certain desired properties of the polymer. WO 97/19963 describes use of a taming or modifying agent when polymerising with a chromium oxide catalyst to increase the melt flow ratio compared to a polymer produced without such an agent. Introduction of such agents, being typically catalyst poisons, can have a detrimental impact on polymerisation operations including activity. EP-0866077-A describes one method of controlling the polymerisation rate of a chromium catalyst whilst introducing an agent to modify polymer properties.

The preferred parameter selected to be controlled by variation of temperature may be measured off-line with manual input to the operating temperature or using an at or in-line measurement device providing, optionally, closed loop control. The parameter may also be calculated or predicted from other operating conditions using advanced or intelligent control systems including for example those provided by Pavillion.

A dramatic impact of polymerisation temperature on production of polymer fines and on the generation of static electricity has also been discovered in the continuous gas phase polymerisation using late transition metal catalysts, such as those of Formula (I), in a fluidised bed reactor system. The generation of fines, particularly, is significantly greater than that expected from experience with polymers of similar density and/or crystallinity produced under similar conditions with other catalysts such as chromium. It has therefore been found to be critically important under such operating conditions to use temperature, amongst other parameters to optimise the polymer particle size produced within the fluidised bed reaction system and to minimise the level of polymer fines accumulated within the reactor and the polymerisation loop. Cyclones are effective in minimising the impact on the polymerisation loop (e.g. heat exchanger, compressor, liquid separator, fluidisation grid and pipework) of carry-over of fine particles from the reactor dis-entrainment zone.

Temperature can also have an impact on other polymerisation conditions, such as catalyst activity in all polymerisation processes such as gas phase, slurry and solution processes. The temperature at which the highest activity is reached in the slurry process has been found to be at a different temperature to that experienced in gas phase operation. Indeed the catalyst activity has surprisingly been found to peak at significantly below the particle sintering temperature constraint in the slurry process.

A preferred reactor temperature control scheme needs therefore, particularly when using temperature to control MWD (or extrudability), additionally to optimise the impact of temperature on all key operating parameters (such as activity, catalyst yield, production rate, fines level, static, product properties) through control of a other control levers that have been found to be effective such as i) monomer concentration and/or feed rate ii) inert hydrocarbon concentration and/or molecular weight and iii) fluidisation velocity.

In a preferred embodiment temperature is used to control MWD (or a parameter indicative of MWD) whilst the concentration of hydrogen is used to control the MW of the polymer.

In the complexes of Formula (I) it is preferred that $A^1$ to $A^3$ are each independently CR where each R is as defined above. In alternative preferred embodiments, $A^1$ and $A^3$ are both N and $A^2$ is CR, or one of $A^1$ to $A^3$ is N and the others are independently CR.

The group L may be an ether such as tetrahydrofuran or diethylether, and alcohol such as ethanol or butanol, a primary, secondary or tertiary amine, or a phosphine.

Preferred catalysts for use in the present invention comprise a complex having the formula

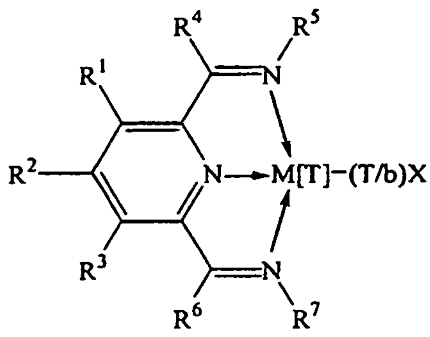

Formula (II)

wherein $R^1$ to $R^7$ are each independently selected from hydrogen, halogen, hydrocarbyl, substituted hydrocarbyl, heterohydrocarbyl, substituted heterohydrocarbyl or $SiR'_3$ where each R' is independently selected from hydrogen, halogen, hydrocarbyl, substituted hydrocarbyl, heterohydrocarbyl, substituted heterohydrocarbyl.

$R^5$ and $R^7$ are preferably independently selected from substituted or unsubstituted alicyclic, heterocyclic or aromatic groups, for example, phenyl, 1-naphthyl, 2-naphthyl, 2-methylphenyl, 2-ethylphenyl, 2,6-diisopropylphenyl, 2,3-diisopropylphenyl, 2,4-diisopropylphenyl, 2,6-di-n-butylphenyl, 2,6-dimethylphenyl, 2,3-dimethylphenyl, 2,4-dimethylphenyl, 2-t-butylphenyl, 2,6-diphenylphenyl, 2,4,6-trimethylphenyl, 2,6-trifluoromethylphenyl, 4-bromo-2,6-dimethylphenyl, 3,5 dichloro2,6-diethylphenyl, and 2,6,bis(2,6-dimethylphenyl)phenyl, cyclohexyl and pyridinyl.

In a preferred embodiment $R^5$ is represented by the group "P" and $R^7$ is represented by the group "Q" as follows:

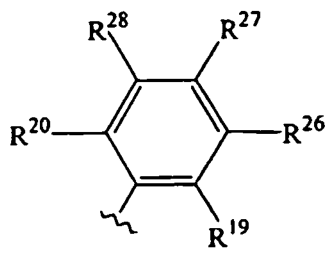

Group P

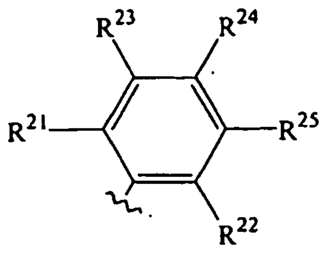

Group Q

wherein $R^{19}$ to $R^{28}$ are independently selected from hydrogen, halogen, hydrocarbyl, substituted hydrocarbyl, heterohydrocarbyl or substituted heterohydrocarbyl; when any two or more of $R^1$ to $R^4$, $R^6$ and $R^{19}$ to $R^{28}$ are hydrocarbyl, substituted hydrocarbyl, heterohydrocarbyl or substituted heterohydrocarbyl, said two or more can be linked to form one or more cyclic substituents.

The ring systems P and Q are preferably independently 2,6-hydrocarbylphenyl or fused-ring polyaromatic, for example, 1-naphthyl, 2-naphthyl, 1-phenanthrenyl and 8-quinolinyl.

Preferably at least one of $R^{19}$, $R^{20}$, $R^{21}$ and $R^{22}$ is hydrocarbyl, substituted hydrocarbyl, heterohydrocarbyl or substituted heterohydrocarbyl. More preferably at least one of $R^{19}$ and $R^{20}$, and at least one of $R^{21}$ and $R^{22}$, is hydrocarbyl, substituted hydrocarbyl, heterohydrocarbyl or substituted heterohydrocarbyl. Most preferably $R^{19}$, $R^{20}$, $R^{21}$ and $R^{22}$ are all independently selected from hydrocarbyl, substituted hydrocarbyl, heterohydrocarbyl or substituted heterohydrocarbyl. $R^{19}$, $R^{20}$, $R^{21}$ and $R^{22}$ are preferably independently selected from methyl, ethyl, n-propyl, iso-propyl, n-butyl, sec-butyl, tert.-butyl, n-pentyl, neopentyl, n-hexyl, 4-methylpentyl, n-octyl, phenyl and benzyl.

$R^1$, $R^2$, $R^3$, $R^4$, $R^6$, $R^{19}$, $R^{20}$, $R^{21}$, $R^{22}$, $R^{23}$, $R^{25}$, $R^{26}$ and $R^{28}$ are preferably independently selected from hydrogen and $C_1$ to $C_8$ hydrocarbyl, for example, methyl, ethyl, n-propyl, n-butyl, t-butyl, n-hexyl, n-octyl, phenyl and benzyl.

In an alternative embodiment $R^5$ is a group having the formula $-NR^{29}R^{30}$ and $R^7$ is a group having the formula $-NR^{31}R^{32}$, wherein $R^{29}$ to $R^{32}$ are independently selected from hydrogen, halogen, hydrocarbyl, substituted hydrocarbyl, heterohydrocarbyl or substituted heterohydrocarbyl; when any two or more of $R^1$ to $R^4$, $R^6$ and $R^{29}$ to $R^{32}$ are hydrocarbyl, substituted hydrocarbyl, heterohydrocarbyl or substituted heterohydrocarbyl, said two or more can be linked to form one or more cyclic substituents.

Each of the atoms nitrogen atoms is coordinated to the metal by a "dative" bond, i.e. a bond formed by donation of a lone pair of electrons from the nitrogen atom. The remaining bonds on each of these atoms are covalent bonds formed by electron sharing between the atoms and the organic ligand as shown in the defined formula for the metal complex illustrated above.

The atom or group represented by X in the compounds of Formula (I) and (II) can be, for example, selected from halide, sulphate, nitrate, thiolate, thiocarboxylate, $BF_4^-$, $PF_6^-$, hydride, hydrocarbyloxide, carboxylate, hydrocarbyl, substituted hydrocarbyl and heterohydrocarbyl, or β-diketonates. Examples of such atoms or groups are chloride, bromide, methyl , ethyl, propyl, butyl, octyl, decyl, phenyl, benzyl, methoxide, ethoxide, isopropoxide, tosylate, triflate, formate, acetate, phenoxide and benzoate. Preferred examples of the atom or group X in the compounds of Formula (I) are halide, for example, chloride, bromide; hydride; hydrocarbyloxide, for example, methoxide, ethoxide, isopropoxide, phenoxide; carboxylate, for example, formate, acetate, benzoate; hydrocarbyl, for example, methyl, ethyl, propyl, butyl, octyl, decyl, phenyl, benzyl; substituted hydrocarbyl; heterohydrocarbyl; tosylate; and triflate. Preferably X is selected from halide, hydride and hydrocarbyl. Chloride is particularly preferred.

Preferred metals M in the complexes of Formula (I) are Fe and Co.

The catalysts utilised in the present invention can if desired comprise more than one of the above-mentioned late transition metal compounds. The catalysts can also include one or more other types of catalyst, such as those of the type used in conventional Ziegler-Natta catalyst systems, metallocene-based catalysts, monocyclopentadienyl- or constrained geometry based catalysts, or heat activated supported chromium oxide catalysts (e.g. Phillips-type catalyst). In addition to the above complex, preferred catalysts for use in the process of the present invention additionally comprise an activator compound. The activator is suitably selected from organoaluminium compounds and hydrocarbylboron compounds. Suitable organoaluminium compounds include compounds of the formula $AlR_3$, where each R is independently $C_1$-$C_{12}$ alkyl or halo. Examples include trimethylaluminium (TMA), triethylaluminium (TEA), tri-isobutylaluminium (TIBA), tri-n-octylaluminium, methylaluminium dichloride, ethylaluminium dichloride, dimethylaluminium chloride, diethylaluminium chloride, ethylaluminiumsesquichloride, methylaluminiumsesquichloride, and alumoxanes. Alumoxanes are well known in the art as typically the oligomeric compounds which can be prepared by the controlled addition of water to an alkylaluminium compound, for example trimethylaluminium. Such compounds can be linear, cyclic or mixtures thereof. Commercially available alumoxanes are generally believed to be mixtures of linear and cyclic compounds. The cyclic alumoxanes can be represented by the formula $[R^{16}AlO]_s$ and the linear alumoxanes by the formula $R^{17}(R^{18}AlO)_s$ wherein s is a number from about 2 to 50, and wherein $R^{16}$, $R^{17}$, and $R^{18}$ represent hydrocarbyl groups, preferably $C_1$ to $C_6$ alkyl groups, for example methyl, ethyl or butyl groups. Alkylalumoxanes such as methylalumoxane (MAO) are preferred.

Mixtures of alkylalumoxanes and trialkylaluminium compounds are particularly preferred, such as MAO with TMA or TIBA. In this context it should be noted that the term "alkylalumoxane" as used in this specification includes alkylalumoxanes available commercially which may contain a proportion, typically about 10wt%, but optionally up to 50wt%, of the corresponding trialkylaluminium; for instance, commercial MAO usually contains approximately 10wt% trimethylaluminium (TMA), whilst commercial MMAO contains both TMA and TIBA. uantities of alkylalumoxane quoted herein include such trialkylaluminium impurities, and accordingly quantities of trialkylaluminium compounds quoted herein are considered to comprise compounds of the formula $AlR_3$ additional to any $AlR_3$ compound incorporated within the alkylalumoxane when present.

Examples of suitable hydrocarbylboron compounds are boroxines, trimethylboron, triethylboron, dimethylphenylammoniumtetra(phenyl)borate, trityltetra(phenyl)borate, triphenylboron, dimethylphenylammonium tetra(pentafluorophenyl)borate, sodium tetrakis[(bis-3,5-trifluoromethyl)phenyl]borate, $H^+(OEt_2)$[(bis-3,5-trifluoromethyl)phenyl]borate, trityltetra(pentafluorophenyl)borate and tris(pentafluorophenyl) boron.

In the preparation of the catalysts utilised in the present invention the quantity of activating compound selected from organoaluminium compounds and hydrocarbylboron compounds to be employed is easily determined by simple testing, for example, by the preparation of small test samples which can be used to polymerise small quantities of the monomer(s) and thus to determine the activity of the produced catalyst. It is generally found that the quantity employed is sufficient to provide 0.1 to 20,000 atoms, preferably 1 to 2000 atoms of aluminium or boron per atom of metal M in the compound of Formula (I).

An alternative class of activators comprise salts of a cationic oxidising agent and a non-coordinating compatible anion. Examples of cationic oxidising agents include: ferrocenium, hydrocarbyl-substituted ferrocenium, $Ag^+$, or $Pb^{2+}$. Examples of non-coordinating compatible anions are $BF_4^-$, $SbCl_6^-$, $PF_6^-$, tetrakis(phenyl)borate and tetrakis(pentafluorophenyl)borate.

The catalyst may also comprise a neutral Lewis base. Neutral Lewis bases are well known in the art of Ziegler-Natta catalyst polymerisation technology. Examples of classes of neutral Lewis bases suitable for the present invention are unsaturated hydrocarbons, for example, alkenes (other than 1-olefins) or alkynes, primary, secondary and tertiary amines, amides, phosphoramides, phosphines, phosphites, ethers, thioethers, nitriles, carbonyl compounds, for example, esters, ketones, aldehydes, carbon monoxide and carbon dioxide, sulphoxides, sulphones and boroxines. Although

I -olefins are capable of acting as neutral Lewis bases, for the purposes of the present invention they are regarded as monomer or comonomer 1-olefins and not as neutral Lewis bases *per se.* However, alkenes which are internal olefins, for example, 2-butene and cyclohexene are regarded as neutral Lewis bases in the present invention.

Preferred monomers for homopolymerisation processes are ethylene and propylene. Suitable other monomers for use in copolymerisation with ethylene and/or propylene are, for example, $C_{2-20}$ $\alpha$-olefins: specifically 1-butene, 1-pentene, 1-hexene, 4-methylpentene-1, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Other monomers include methyl methacrylate, methyl acrylate, butyl acrylate, acrylonitrile, vinyl acetate, and styrene.

Irrespective of the polymerisation or copolymerisation technique employed, polymerisation or copolymerisation is typically carried out under conditions that substantially exclude oxygen, water, and other materials that act as catalyst poisons. Also, polymerisation or copolymerisation can be carried out in the presence of additives to control polymer or copolymer molecular weights.

The process of the present invention is preferably gas phase. The gas phase process is conveniently operated at a temperature of between 50 and 120°C, preferably between 80 and 110°C. We have found that with the catalyst systems employed in the present invention, increasing the polymerisation temperature causes a significant decrease in the molecular weight distribution. This is not known with other catalyst systems, and is particularly surprising.

The use of hydrogen gas as a means of controlling the average molecular weight of the polymer or copolymer applies generally to the polymerisation process utilised in the present invention. For example, hydrogen can be used to reduce the average molecular weight of polymers or copolymers prepared using gas phase, slurry phase, bulk phase or solution phase polymerisation conditions. The quantity of hydrogen gas to be employed to give the desired average molecular weight can be determined by simple "trial and error" polymerisation tests.

The gas phase polymerisation conditions utilised in the invention are particularly useful for the production of high or low density grades of polyethylene, and polypropylene. In these processes the polymerisation conditions can be batch, continuous or semi-continuous. Furthermore, one or more reactors may be used, e.g. from two to five reactors in series. Different reaction conditions, such as different temperatures or hydrogen or comonomer concentrations may be employed in the different reactors. In the gas phase process, the catalyst is generally metered and transferred into the polymerisation zone in the form of a particulate solid either as a dry powder (e.g. with an inert gas) or as a slurry. This solid can be, for example, a solid catalyst system formed from the one or more of complexes of the invention and an activator with or without other types of catalysts, or can be the solid catalyst alone with or without other types of catalysts. In the latter situation, the activator can be fed to the polymerisation zone, for example as a solution, separately from or together with the solid catalyst. Preferably the catalyst system or the transition metal complex component of the catalyst system employed in the gas phase polymerisation is supported on one or more support materials. Most preferably the catalyst system is supported on the support material prior to its introduction into the polymerisation zone. Suitable support materials are, for example, silica, alumina, zirconia, talc, kieselguhr, or magnesia. Impregnation of the support material can be carried out by conventional techniques, for example, by forming a solution or suspension of the catalyst components in a suitable diluent or solvent, and slurrying the support material therewith. The support material thus impregnated with catalyst can then be separated from the diluent for example, by filtration or evaporation techniques. Once the polymer product is discharged from the reactor, any associated and absorbed hydrocarbons are substantially removed, or degassed, from the polymer by, for example, pressure let-down or gas purging using fresh or recycled steam, nitrogen or light hydrocarbons (such as ethylene). Recovered gaseous or liquid hydrocarbons may be recycled to the polymerisation zone.

Methods for operating gas phase polymerisation processes are well known in the art. Such methods generally involve agitating (e.g. by stirring, vibrating or fluidising) a bed of catalyst, or a bed of the target polymer (i.e. polymer having the same or similar physical properties to that which it is desired to make in the polymerisation process) containing a catalyst, and feeding thereto a stream of monomer at least partially in the gaseous phase, under conditions such that at least part of the monomer polymerises in contact with the catalyst in the bed. The bed is generally cooled by the addition of cool gas (e.g. recycled gaseous monomer) and/or volatile liquid (e.g. a volatile inert hydrocarbon, or gaseous monomer which has been condensed to form a liquid). The polymer produced in, and isolated from, gas phase processes forms directly a solid in the polymerisation zone and is free from, or substantially free from liquid. As is well known to those skilled in the art, if any liquid is allowed to enter the polymerisation zone of a gas phase polymerisation process the quantity of liquid in the polymerisation zone is small in relation to the quantity of polymer present. This is in contrast to "solution phase" processes wherein the polymer is formed dissolved in a solvent, and "slurry phase" processes wherein the polymer forms as a suspension in a liquid diluent.

The gas phase process can be operated under batch, semi-batch, or so-called "continuous" conditions. It is preferred to operate under conditions such that monomer is continuously recycled to an agitated polymerisation zone containing polymerisation catalyst, make-up monomer being provided to replace polymerised monomer, and continuously or intermittently withdrawing produced polymer from the polymerisation zone at a rate comparable to the rate of formation of the polymer, fresh catalyst being added to the polymerisation zone to replace the catalyst withdrawn form the polymerisation zone with the produced polymer.

For typical production of impact copolymers, homopolymer formed from the first monomer in a first reactor is reacted with the second monomer in a second reactor. For manufacture of propylene/ethylene impact copolymer in a gas-phase process, propylene is polymerized in a first reactor; reactive polymer transferred to a second reactor in which ethylene or other comonomer is added. The result is an intimate mixture of a isotactic polypropylene chains with chains of a random propylene/ethylene copolymer. A random copolymer typically is produced in a single reactor in which a minor amount of a comonomer (typically ethylene) is added to polymerizing chains of propylene.

Methods for operating gas phase fluidised bed processes for making polyethylene, ethylene copolymers and polypropylene are well known in the art. The process can be operated, for example, in a vertical cylindrical reactor equipped with a perforated distribution plate to support the bed and to distribute the incoming fluidising gas stream through the bed. The fluidising gas circulating through the bed serves to remove the heat of polymerisation from the bed and to supply monomer for polymerisation in the bed. Thus the fluidising gas generally comprises the monomer(s) normally together with some inert gas (e.g. nitrogen or inert hydrocarbons such as methane, ethane, propane, butane, pentane or hexane) and optionally with hydrogen as molecular weight modifier. The hot fluidising gas emerging from the top of the bed is led optionally through a velocity reduction zone (this can be a cylindrical portion of the reactor having a wider diameter) and, if desired, a cyclone and or filters to disentrain fine solid particles from the gas stream. The hot gas is then led to a heat exchanger to remove at least part of the heat of polymerisation. Catalyst is preferably fed continuously or at regular intervals to the bed. At start up of the process, the bed comprises fluidisable polymer which is preferably similar to the target polymer. Prior to start-up it is preferred to purge the reaction system of catalyst poisons and to further purify the reaction system (fluidised bed reactor and associated loop pipe-work) with a poison scavenger such as an alkyl aluminium, for example TEAL. Additionally it may be advantageous to pre-load the start-up bed with such an aluminium alkyl. Polymer is produced continuously within the bed by the polymerisation of the monomer(s). Preferably means are provided to discharge polymer from the bed continuously or at regular intervals to maintain the fluidised bed at the desired height. The process is generally operated at temperatures for example, between 50 and 120°C. The temperature of the bed is maintained below the sintering temperature of the fluidised polymer to avoid problems of agglomeration. Inert solids, as described in EP 266074, may be added to the fluidised bed to improve fluidisation characteristics, particularly when producing sticky polymers of very low density or at close to the sintering temperature.

In the gas phase fluidised bed process for polymerisation of olefins the heat evolved by the exothermic polymerisation reaction is normally removed from the polymerisation zone (i.e. the fluidised bed) by means of the fluidising gas stream as described above. The hot reactor gas emerging from the top of the bed is led through one or more heat exchangers wherein the gas is cooled. The cooled reactor gas, together with any make-up gas, is then recycled to the base of the bed. In the gas phase fluidised bed polymerisation process of the present invention it is desirable to provide additional cooling of the bed (and thereby improve the space time yield of the process) by feeding a volatile liquid to the bed under conditions such that the liquid evaporates in the bed thereby absorbing additional heat of polymerisation from the bed by the "latent heat of evaporation" effect. When the hot recycle gas from the bed enters the heat exchanger, the volatile liquid can condense out. In one embodiment of the present invention the volatile liquid is separated from the recycle gas and reintroduced separately into the bed. Thus, for example, the volatile liquid can be separated and sprayed into the bed. In another embodiment of the present invention the volatile liquid is recycled to the bed with the recycle gas. Thus the volatile liquid can be condensed from the fluidising gas stream emerging from the reactor and can be recycled to the bed with recycle gas, or can be separated from the recycle gas and then returned to the bed.

The method of condensing liquid in the recycle gas stream and returning the mixture of gas and entrained liquid to the bed is described in EP-A-0089691 and EP-A-0241947. It is preferred to reintroduce the condensed liquid into the bed separate from the recycle gas using the process described in our US Patent 5541270, the teaching of which is hereby incorporated into this specification.

When using the catalysts of the present invention under gas phase polymerisation conditions, the catalyst, or one or more of the components employed to form the catalyst can, for example, be introduced into the polymerisation reaction zone in liquid form, for example, as a solution in an inert liquid diluent. Thus, for example, the transition metal component, or the activator component, or both of these components can be dissolved or slurried in a liquid diluent and fed to the polymerisation zone. Under these circumstances it is preferred the liquid containing the component(s) is sprayed as fine droplets into the polymerisation zone. The droplet diameter is preferably within the range 1 to 1000 microns. EP-A-0593083, the teaching of which is hereby incorporated into this specification, discloses a process for introducing a polymerisation catalyst into a gas phase polymerisation. The methods disclosed in EP-A-0593083 can be suitably employed in the polymerisation process of the present invention if desired.

Although not usually required, upon completion of polymerisation or copolymerisation, or when it is desired to terminate polymerisation or copolymerisation or at least temporarily temper the activity of the catalyst or completely deactivate the catalyst or catalyst component of this invention, the catalyst can be contacted with water, carbon dioxide, carbon monoxide, alcohols, acetone, or other suitable catalyst deactivators in a manner known to persons of skill in the art.

The present invention is illustrated in the following Examples.

EXAMPLES

EXAMPLE 1

Catalyst Preparation

The catalyst used was 2,6-diacetylpyridinebis(2,4,6-trimethylanil)$FeCl_2$ activated with methylaluminoxane (MAO) and supported on silica (Crosfield grade ES70X). The preparation of this catalyst is described in detail in WO 99/46304, the content of which is incorporated herein by reference.

EXAMPLE 2

Polymerisation

The polymerisations were carried out in a fluidised bed gas phase polymerisation reactor consisting of a plenum, a distribution grid, a vertical cylinder of diameter 0.75m and height 5m and a velocity reduction chamber. The hot reaction gases exiting the fluidised bed reactor pass through the expanded velocity reduction zone and are recycled to the reactor via a line equipped with a compressor and with a heat transfer means. The cooled recycle gas enters the reactor plenum in the lower part of the reactor vessel and into the fluidised bed consisting of a high density polyethylene powder via the distribution grid. Fresh make-up ethylene, pentane, hydrogen and nitrogen, which represent the main constituents of the gas reaction mixture are introduced into the recycle line.

The gas reaction mixture, which contains ethylene, pentane, hydrogen and nitrogen and other minor components passes through the fluidised bed at a pressure of 2.4MPa, and with an upward fluidisation velocity of 0.42m/s.

The polyethylene powder produced is continuously withdrawn to maintain a constant fluidised bed height.

The catalyst used was the catalyst prepared according to Example 1. The catalyst injection rate was set such as to maintain the production rate constant at the desired level.

The operating conditions in the various runs are shown in Table 1 below.

TABLE 1

| Reference | | A | B | C | D | E |
|---|---|---|---|---|---|---|
| T polymerisation | °C | 106 | 100 | 95 | 90 | 80 |
| Partial pressure $C_2H_4$ | bar | 8 | 8 | 8 | 8 | 8 |
| $pH_2/pC_2$ | | 0.06 | 0.18 | 0.27 | 0.32 | 0.56 |
| Partial pressure pentane | bar | 2 | 2 | 2 | 2 | 2 |
| Bed Level | m | 5 | 5 | 5 | 5 | 5 |
| Fluidisation Velocity | cm/s | 40 | 40 | 40 | 40 | 42 |
| Production rate | kg/h | 90 | 80 | 80 | 90 | 100 |
| $pH_2/pC_2$ = ratio of partial pressure of $H_2$ to partial pressure of ethylene | | | | | | |

The physical properties of the polymers were evaluated, and are shown in Table 2 below.

Melt Mass-Flow Rate (MFR)

Melt Mass-Flow Rate of the materials was measured to ISO 1133:1997 - condition 7.

Annealed density

This was measured to specification ISO 1872-1:1993 using test method ISO 1183:1987.

Plastic Recovery (PR)

This was measured as follows. A sample of polymer is extruded through a standard melt flow rate at 190°C in accordance with ISO 1133:1997 - condition 7 and the extrudate left to cool to ambient temperature. The extrudate diameter is measured at two points (within 6mm of the lower end) and the average of these two measurements taken to be the average mean diameter. PR is then calculated as

$$PR\% = 100 \times \frac{\text{Mean diameter of extrudate - diameter of die orifice}}{\text{Diameter of die orifice}}$$

TABLE 2

| | A | B | C | D | E |
|---|---|---|---|---|---|
| Polymerisation temp. - °C | **106** | **100** | **95** | **90** | **80** |
| | | | | | |
| Extrudate Density - kg/$m^3$ | 962.1 | 963.2 | 963.4 | 963.5 | 963.5 |
| Annealed Density - kg/$m^3$ | 963.7 | 965.4 | 965.9 | 965.9 | 965.3 |
| | | | | | |
| MWD $M_w/M_n$ by GPC | **6.5** | **7.5** | **8.9** | **9.6** | **10.8** |
| | | | | | |
| MFR 2.16kg - g/600s | 0.616 | 0.708 | 0.621 | 0.536 | 0.462 |
| MFR 5.00kg - g/600s | 2.32 | 2.67 | 2.4 | 2.23 | 1.87 |
| MFR 21.6kg - g/600s | 30.14 | 39.7 | 37.43 | 39.92 | 36.5 |
| | | | | | |
| **MFR ratio** | **49** | **56** | **60** | **74** | **79** |
| | | | | | |
| PR 2.16kg - % | 28 | 27 | 30 | 29 | 29 |
| PR 5.00kg - % | 38 | 41 | 40 | 43 | 43 |
| PR 21.6kg - % | 80 | 83 | 86 | 93 | 92 |
| | | | | | |

EXAMPLE 3

The catalyst used was 2,6-diacetylpyridinebis(2,4,6-trimethylanil)$FeCl_2$ activated with methylaluminoxane (MAO) and supported on silica (Crosfield grade ES70X), pre-calcined for for 6 hours at 200°C under nitrogen. The preparation of the complex is described in detail in WO 99/46304.

Catalysts A and B had the following compositions:

Catalyst A:

Al = 6.05%

Fe = 0.127%

MAO:Fe 100:1 molar

Catalyst B:

Al = 5.92%

Fe = 0.125%

MAO:Fe 98:1 molar

Two polymerisations were conducted. The reaction conditions and polymer properties are given below in Table 3.

TABLE 3

| | Catalyst A | Catalyst B |
|---|---|---|
| Temperature - °C | 80 | 90 |
| Ethylene - vol% | 8.6 | 15.0 |
| Hydrogen - vol% | 0.6 | 0.65 |
| Solids content-% | 25 | 24.5 |
| Productivity - g/g | 3763 | 6800 |
| Rate - kg/h | 7.5 | 7.5 |
| Powder melt index | 0.52 | 0.41 |
| Powder GPC: $M_n$ | 16100 | 19700 |
| $M_w$ | 174400 | 151700 |
| MWD - $M_n/M_w$ | 10.8 | 7.7 |
| Pelletised melt index (2.16kg) | 0.45 | 0.38 |
| Pellet annealed density - kg/$m^3$ | 963.7 | 963.9 |

It can be seen that the molecular weight distribution is lower at higher polymerisation temperature, as also shown in Example 2.

## Claims

1. Use of temperature to control the molecular weight distribution $M_w/M_n$ of polymer, produced by a process which comprises contacting monomeric olefin under polymerisation conditions with a polymerisation catalyst comprising a late transition metal complex of the formula

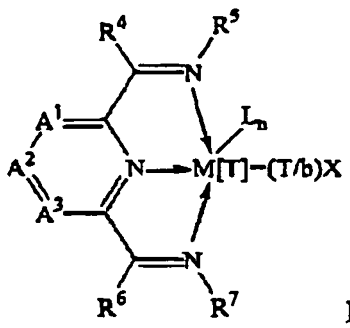

Formula (I)

wherein M is Fe[II], Fe[III], Co[II], Co[III], Ni[II], Rh[II], Rh[III], Ru[II], Ru[III], Ru[IV] or Pd[II]; X represents an atom or group covalently or ionically bonded to the transition metal M; T is the oxidation state of the transition metal M and b is the valency of the atom or group X; L is a group datively bound to M, and n is from 0 to 5; $A^1$ to $A^3$ are each independently N or P or CR, with the proviso that at least one is CR; and $R^4$ to $R^7$ are each independently selected

from hydrogen, halogen, hydrocarbyl, substituted hydrocarbyl, heterohydrocarbyl, substituted heterohydrocarbyl or $SiR'_3$ where each R' is independently selected from hydrogen, halogen, hydrocarbyl, substituted hydrocarbyl, heterohydrocarbyl and substituted heterohydrocarbyl.

**2.** Use according to claim 1 wherein the late transition metal complex is a complex having the formula

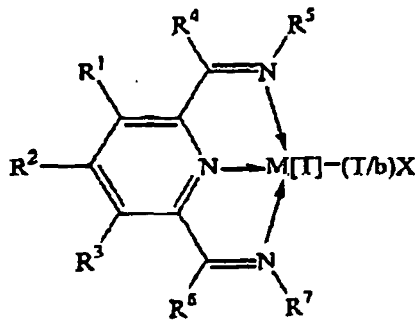

Formula (II)

wherein $R^1$ to $R^7$ are each independently selected from hydrogen, halogen, hydrocarbyl, substituted hydrocarbyl, heterohydrocarbyl, substituted heterohydrocarbyl or $SiR'_3$ where each R' is independently selected from hydrogen, halogen, hydrocarbyl, substituted hydrocarbyl, heterohydrocarbyl, substituted heterohydrocarbyl.

**3.** Process according to claim 2 wherein $R^5$ is represented by the group "P" and $R^7$ is represented by the group "Q" as follows:

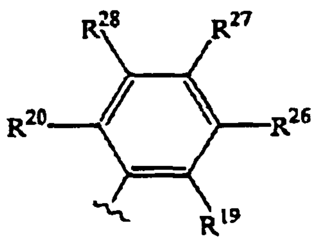

Group P

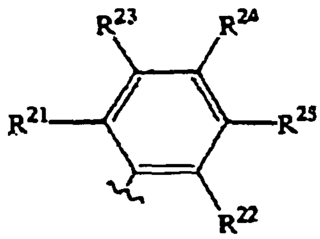

Group Q

wherein $R^{19}$ to $R^{28}$ are independently selected from hydrogen, halogen, hydrocarbyl, substituted hydrocarbyl, heterohydrocarbyl or substituted heterohydrocarbyl; when any two or more of $R^1$ to $R^4$, $R^6$ and $R^{19}$ to $R^{28}$ are hydrocarbyl, substituted hydrocarbyl, heterohydrocarbyl or substituted heterohydrocarbyl, said two or more can be linked to form one or more cyclic substituents.

**4.** Use according to any one of claims 1 to 3, wherein $R^5$ and $R^7$ are both independently alkyl substituted phenyl.

**5.** Use according to any one of claims 1 to 4, wherein the late transition metal complex is 2,6-diacetyipyridinebis(2,4,6-trimethylanil)$FeCl_2$, supported on silica, alumina, zirconia, talc, kieselguhr, or magnesia.

**6.** Use according to any preceding claim, wherein the polymerisation catalyst additionally comprises a Ziegler-Natta catalyst, metallocene-based catalyst, monocyclopentadienyl- or constrained geometry based catalyst, or a heat activated supported chromium oxide catalyst.

**7.** Use according to any preceding claim, wherein the polymerisation is carried out in the presence of additives to control polymer or copolymer molecular weights.

**8.** Use according to any preceding claim, wherein the polymerisation takes place in from two to five reactors in series.

**9.** Use according to any preceding claim, in conjunction with the use of hydrogen concentration to control the molecular weight of the polymer.

**10.** Use according to any preceding claim wherein the polymerisation conditions are gas phase.

**11.** Use according to claim 10, wherein the polymerisation is carried out in a fluidised bed, and additional cooling of the bed is provided by feeding a volatile liquid to the bed under conditions such that the liquid evaporates in the bed.

**12.** Use according to claim 10 or 11, wherein the gas phase process is operated at a temperature of between 50 and 120°C, preferably between 80 and 110°C.

**13.** Use according to any one of claims 10 to 12, wherein one or more of the components employed to form the catalyst is introduced into the polymerisation reaction zone in liquid form.

**14.** Use according to any preceding claim, wherein prior to start-up the reaction system is purified and purged of catalyst poisons with an alkyl aluminium.

**15.** Use according to any preceding claim, wherein temperature is used also to control the die-swell, plastic recovery or MFR ratio of polymer.

**Patentansprüche**

**1.** Verwendung der Temperatur zur Kontrolle der Molekulargewichtsverteilung $M_w/M_n$ eines Polymers, hergestellt durch ein Verfahren, umfassend das Kontaktieren des monomeren Olefins unter Polymerisationsbedingungen mit einem Polymerisationskatalysator, umfassend einen späten Übergangsmetallkomplex der Formel

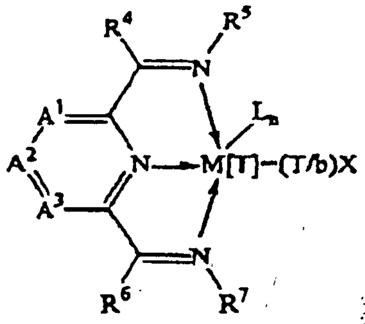

Formel (I)

worin M Fe[II], Fe[III], Co[II], Co[III], Ni[II], Rh[II], Rh[III], Ru[II], Ru[III], Ru[IV] oder Pd[II] ist; X ein Atom oder eine Gruppe darstellt, die kovalent oder ionisch an das Übergangsmetall M gebunden ist; T die Oxidationszahl des Übergangsmetalls M ist und b die Valenz des Atoms oder der Gruppe X ist; L eine Gruppe ist, die dativ an M gebunden ist, und n 0 bis 5 ist; $A^1$ bis $A^3$ unabhängig voneinander N oder P oder CR sind, mit der Maßgabe, daß mindestens eines CR ist; und $R^4$ bis $R^7$ unabhängig voneinander aus Wasserstoff, Halogen, Hydrocarbyl, substituiertem Hydrocarbyl, Heterohydrocarbyl, substituiertem Heterohydrocarbyl oder $SiR'_3$ ausgewählt sind, wo jedes R' unabhängig aus Wasserstoff, Halogen, Hydrocarbyl, substituiertem Hydrocarbyl, Heterohydrocarbyl und substituiertem Heterohydrocarbyl ausgewählt ist.

**2.** Verwendung nach Anspruch 1, wobei der späte Übergangsmetallkomplex ein Komplex mit der Formel ist

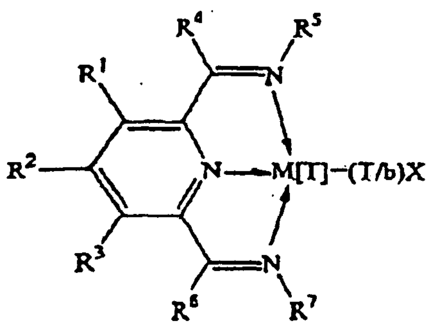

Formel (II)

worin $R^1$ bis $R^7$ jeweils unabhängig voneinander aus Wasserstoff, Halogen, Hydrocarbyl, substituiertem Hydrocarbyl, Heterohydrocarbyl, substituiertem Heterohydrocarbyl oder $SiR'_3$ ausgewählt sind, wobei jedes R' unabhängig aus Wasserstoff, Halogen, Hydrocarbyl, substituiertem Hydrocarbyl, Heterohydrocarbyl, substituiertem Heterohydrocarbyl ausgewählt ist.

3. Verfahren nach Anspruch 2, wobei $R^5$ durch die Gruppe "P" dargestellt ist und $R^7$ durch die Gruppe "Q" dargestellt ist, wie folgt:

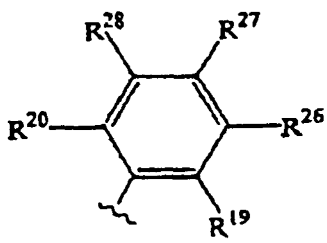

Gruppe P

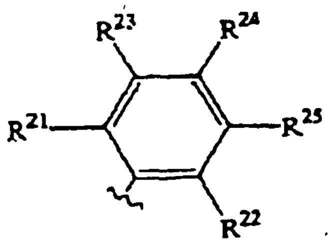

Gruppe Q

worin $R^{19}$ bis $R^{28}$ unabhängig voneinander aus Wasserstoff, Halogen, Hydrocarbyl, substituiertem Hydrocarbyl, Heterohydrocarbyl oder substituiertem Heterohydrocarbyl ausgewählt sind; wobei, wenn zwei oder mehrere von $R^1$ bis $R^4$, $R^6$ und $R^{19}$ bis $R^{28}$ Hydrocarbyl, substituiertes Hydrocarbyl, Heterohydrocarbyl oder substituiertes Heterohydrocarbyl sind, diese zwei oder mehreren Reste unter Bildung von einem oder mehreren cyclischen Substituenten verknüpft sein können.

4. Verwendung nach einem der Ansprüche 1 bis 3, wobei $R^5$ und $R^7$ beide unabhängig Alkylsubstituiertes Phenyl sind.

5. Verwendung nach einem der Ansprüche 1 bis 4, wobei der späte Übergangsmetallkomplex 2,6-Diacetylpyridinbis (2,4,6-trimethylanil)$FeCl_2$, getragen auf Siliciumdioxid, Aluminiumoxid, Zirkoniumdioxid, Talk, Kieselgur oder Magnesiumoxid, ist.

6. Verwendung nach einem vorhergehenden Anspruch, wobei der Polymerisationskatalysator außerdem einen Ziegler-Natta-Katalysator, Katalysator auf Metallocenbasis, Katalysator auf Monocyclopentadienylbasis oder einen Katalysator mit eingeschränkter Geometrie oder einen wärmeaktivierten Trägerchromoxidkatalysator umfaßt.

7. Verwendung nach einem vorhergehenden Anspruch, wobei die Polymerisation in Gegenwart von Additiven zur Kontrolle der Polymer- oder Copolymermolekulargewichte durchgeführt wird.

8. Verwendung nach einem vorhergehenden Anspruch, wobei die Polymerisation in zwei bis fünf Reaktoren in Reihe stattfindet.

9. Verwendung nach einem vorhergehenden Anspruch zusammen mit der Verwendung von Wasserstoffkonzentration

zur Kontrolle des Molekulargewichts des Polymers.

**10.** Verwendung nach einem vorhergehenden Anspruch, wobei die Polymerisationsbedingungen Gasphasenbedingungen sind.

**11.** Verwendung nach Anspruch 10, wobei die Polymerisation in einem Fließbett durchgeführt wird, und zusätzliches Abkühlen des Bettes durch Einspeisen einer flüchtigen Flüssigkeit in das Bett unter derartigen Bedingungen bereitgestellt wird, daß die Flüssigkeit in dem Bett verdampft.

**12.** Verwendung nach Anspruch 10 oder 11, wobei das Gasphasenverfahren bei einer Temperatur zwischen 50 und 120 °C, vorzugsweise zwischen 80 und 110 °C betrieben wird.

**13.** Verwendung nach einem der Ansprüche 10 bis 12, wobei eine oder mehrere der Komponenten, die zur Bildung des Katalysators eingesetzt werden, in die Polymerisationsreaktionszone in flüssiger Form eingeführt werden.

**14.** Verwendung nach einem vorhergehenden Anspruch, wobei vor Beginn das Reaktionssystem gereinigt und mit einem Alkylaluminium von Katalysatorgiften befreit wird.

**15.** Verwendung nach einem vorhergehenden Anspruch, wobei die Temperatur verwendet wird, um ebenso die Strangaufweitung, Formrückgewinnung oder das MFR-Verhältnis des Polymers zu kontrollieren.

**Revendications**

**1.** Utilisation de la température pour réguler la distribution de poids moléculaires Mw/Mn de polymère produit par un procédé qui comprend la mise en contact d'une oléfine monomérique dans des conditions de polymérisation avec un catalyseur de polymérisation comprenant un complexe de dernier métal de transition répondant à la formule :

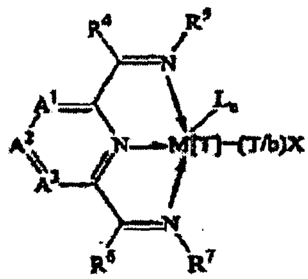

formule (I)

dans laquelle M représente Fe(II), Fe(III), Co(II), Co(III), Ni(II), Rh(II), Rh(III), Ru(II), Ru(III), Ru (IV) et Pd(II) ; X représente un atome ou un groupe lié par covalence ou ioniquement au métal de transition M ; T représente le degré d'oxydation du métal de transition M et b représente la valence de l'atome ou du groupe X ; L représente un groupe lié dativement à M, et n a pour valeur de 0 à 5 ; $A^1$ à $A^3$ représentent chacun indépendamment N, ou P, où CR avec la précision qu'au moins un représente CR ; et $R^4$ à $R^7$ sont chacun indépendamment choisis parmi l'hydrogène, l'halogène, un groupe hydrocarbyle, hydrocarbyle substitué, hétérohydrocarbyle, hétérohydrocarbyle substitué ou $SiR'_3$ où chaque R' est indépendamment choisi parmi l'hydrogène, l'halogène, un groupe hydrocarbyle, hydrocarbyle substitué, hétérohydrocarbyle et hétérohydrocarbyle substitué.

**2.** Utilisation selon la revendication 1, dans laquelle le complexe de dernier métal de transition est un complexe répondant à la formule

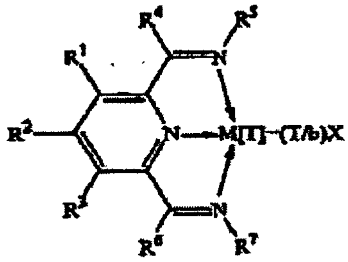

formule (II)

dans laquelle $R^1$ à $R^7$ sont choisis indépendamment parmi l'hydrogène, l'halogène, un groupe hydrocarbyle, hydrocarbyle substitué, hétérohydrocarbyle, hétérohydrocarbyle substitué ou $SiR'_3$ où chaque R' est indépendamment choisi parmi l'hydrogène, l'halogène, un groupe hydrocarbyle, hydrocarbyle substitué, hétérohydrocarbyle et hétérohydrocarbyle substitué.

**3.** Procédé selon la revendication 2, dans lequel $R^5$ est représenté par le groupe « P » et $R^7$ est représenté par le groupe « Q » comme suit :

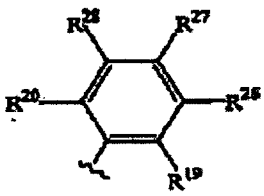

Groupe P

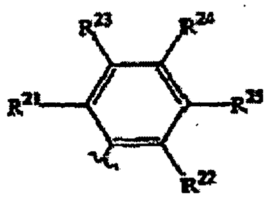

Groupe Q

formules dans lesquelles $R^{19}$ à $R^{28}$ sont indépendamment choisis parmi l'hydrogène, l'halogène, un groupe hydrocarbyle, hydrocarbyle substitué, hétérohydrocarbyle ou hétérohydrocarbyle substitué; lorsque deux ou plus de deux parmi $R^1$ à $R^4$, $R^6$ et $R^{19}$ à $R^{28}$ représentent un groupe hydrocarbyle, hydrocarbyle substitué, hétérohydrocarbyle ou hétérohydrocarbyle substitué, lesdits deux ou plus de deux peuvent être liés pour former un ou plusieurs substituant(s) cyclique(s).

**4.** Utilisation selon l'une quelconque des revendications 1 à 3, dans laquelle $R^5$ et $R^7$ représentent tous deux indépendamment un groupe phényle à substitution alkyle.

**5.** Utilisation selon l'une quelconque des revendications 1 à 4, dans laquelle le complexe de dernier métal de transition est 2,6-diacétylpyridinebis-(2,4,6-triméthylanil)$FeCl_2$, supporté sur de la silice, de l'alumine, de la zircone, du talc, du kieselguhr ou de la magnésie.

**6.** Utilisation selon l'une quelconque des revendications précédentes, dans laquelle le catalyseur de polymérisation comprend en outre un catalyseur Ziegler-natta, un catalyseur à base de métallocène, un catalyseur à base de monocyclopentadiényle ou de géométrie contrainte, ou un catalyseur d'oxyde de chrome supporté activé par la chaleur.

**7.** Utilisation selon l'une quelconque des revendications précédentes, dans laquelle la polymérisation est effectuée en présence d'additifs pour réguler les poids moléculaires du polymère ou du copolymère.

**8.** Utilisation selon l'une quelconque des revendications précédentes, dans laquelle la polymérisation a lieu dans deux à cinq réacteurs en série.

**9.** Utilisation selon l'une quelconque des revendications précédentes, conjointement avec l'utilisation d'une concentration en hydrogène pour réguler le poids moléculaire du polymère.

**10.** Utilisation selon l'une quelconque des revendications précédentes, dans laquelle les conditions de polymérisation sont celles de la polymérisation en phase gazeuse.

**11.** Utilisation selon la revendication 10, dans laquelle la polymérisation est effectuée dans un lit fluidisé, et un refroidissement supplémentaire du lit est assuré par l'introduction d'un liquide volatil dans le lit dans des conditions telles que le liquide s'évapore dans celui-ci.

**12.** Utilisation selon la revendication 10 ou 11, dans laquelle le procédé en phase gazeuse est mis en oeuvre à une température située entre 50 et 120°C, préférablement entre 80 et 110°C.

**13.** Utilisation selon l'une quelconque des revendications 10 à 12, dans laquelle un ou plusieurs des composants employés pour former le catalyseur est (sont) introduit(s) dans la zone de réaction de polymérisation sous forme liquide.

**14.** Utilisation selon l'une quelconque des revendications précédentes, dans laquelle le système de réaction est, avant le début de la réaction, purifié et purgé des poisons de catalyseur avec un alkylaluminium.

**15.** Utilisation selon l'une quelconque des revendications précédentes, dans laquelle la température est utilisée également pour réguler le gonflement en filière, la recouvrance plastique ou l'indice de fluidité du polymère.

*Fig. 1*

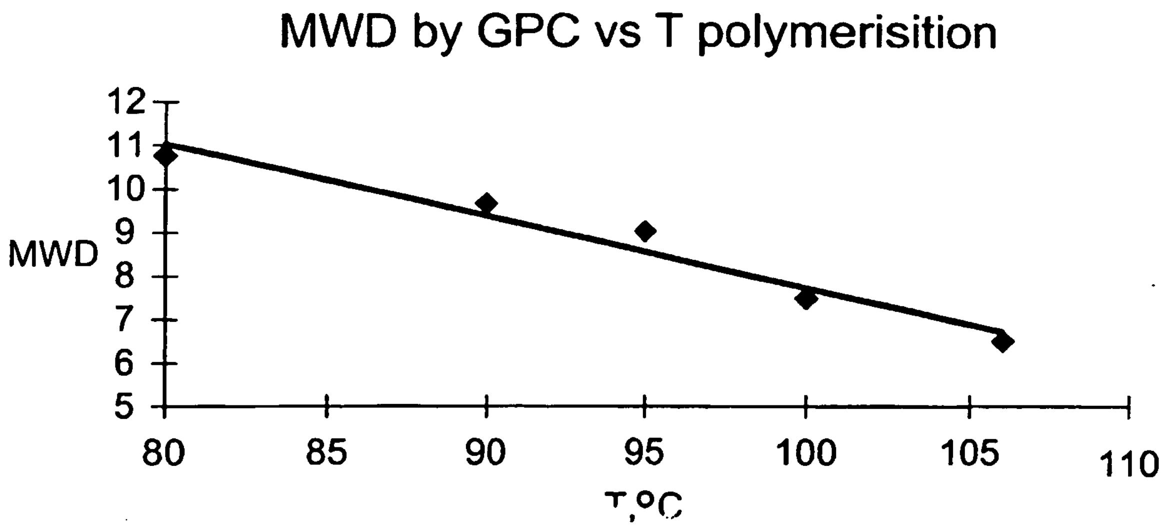
MWD by GPC vs T polymerisition
MWD
12
11
10
9
8
7
6
5
80
85
90
95
100
105
110
T,°C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9912981 A
- WO 9900713 A
- EP 1026180 A
- WO 9719963 A
- EP 0866077 A
- EP 266074 A
- EP 0089691 A
- EP 0241947 A
- US 5541270 A
- EP 0593083 A
- WO 9946304 A